# FASCICULE DE BREVET EUROPEEN

(11) **EP 1 536 240 B1**
(45) Date de publication et mention de la délivrance du brevet: **27.02.2013**
(21) Numéro de dépôt: 04105224.2
(22) Date de dépôt: 21.10.2004
(51) Int. Cl.: G01P 15/097, G01P 15/08, G01P 15/125

(54) **Accéléromètre différentiel micro-usiné multi-axes**
Differenzieller mikromechanischer mehrachsiger Beschleunigungsaufnehmer
Differential micromachined multi-axis accelerometer

(30) Priorité: 25.11.2003 FR 0313820
(43) Date de publication de la demande: 01.06.2005
(73) Titulaire: Thales, 92200 Neuilly Sur Seine (FR)
(72) Inventeur: Ingelse, Jérôme, 94117, ARCUEIL Cedex (FR); Leverrier, Bertrand, 94117, ARCUEIL Cedex (FR); Rougeot, Claude, 94117, ARCUEIL Cedex (FR)
(74) Mandataire: Henriot, Marie-Pierre

(56) Documents cités:
- PATENT ABSTRACTS OF JAPAN vol. 2000, no. 06, 22 septembre 2000 (2000-09-22) -& JP 2000 081338 A (DENSO CORP), 21 mars 2000 (2000-03-21)
- TABATA O ET AL: "Two-axis detection resonant accelerometer based on rigidity change" SENSORS AND ACTUATORS A, ELSEVIER SEQUOIA S.A., LAUSANNE, CH, vol. 75, no. 1, 4 mai 1999 (1999-05-04), pages 53-59, XP004170603 ISSN: 0924-4247

## Description

L'invention concerne un micro-accéléromètre, c'est-à-dire un capteur micromécanique inertiel dédié à la mesure d'accélérations, réalisé par des techniques de micro-usinage.

Le domaine de l'invention est celui des accéléromètres monolithiques plats. La structure plate permet une fabrication simple et économique notamment par des procédés d'attaque chimique. De plus, la fabrication peut être collective.

Un accéléromètre différentiel monolithique plat comporte classiquement un corps ayant une base et une cellule de mesure différentielle. Une cellule de mesure différentielle comprend typiquement une masse sismique reliée d'une part à la base et d'autre part à deux capteurs de force en vue d'une mesure différentielle, ces capteurs étant eux-mêmes également reliés à la base. Lorsque l'accéléromètre est soumis à une accélération suivant l'axe sensible qui est l'axe de l'accélération à mesurer, la masse sismique est soumise à une force d'inertie qui est transmise aux capteurs de force par des moyens permettant éventuellement d'amplifier la force ou le déplacement transmis.

Le capteur de force est par exemple à poutre vibrante. La poutre vibrante est reliée à des électrodes permettant de la faire vibrer à sa fréquence de résonance et à un circuit de mesure de la variation de sa fréquence de résonance.

Les deux capteurs de force sont montés de manière à ce que lorsque l'accéléromètre est soumis à une accélération suivant l'axe sensible, l'une des poutres subit une force de traction, l'autre poutre subissant une force de compression de même valeur, ces traction ou compression faisant varier la fréquence de résonance de la poutre mesurée par le circuit de mesure. On obtient ainsi une mesure différentielle permettant notamment de s'affranchir de certains effets non linéaires.

Un tel accéléromètre n'est sensible à l'accélération que suivant un axe, l'axe sensible.

On souhaite pouvoir mesurer l'accélération selon plusieurs axes.

Une solution consiste à installer plusieurs accéléromètres, un par axe, ce qui a pour inconvénient d'être coûteux et encombrant.

D'autres accéléromètres, qui permettent une mesure d'accélération suivant plusieurs axes sans avoir recours à plusieurs accéléromètres sont décrits dans les documents JP2000081338 et TABATA O ET AL: "Two-axis detection resonant accelerometer based on rigidity change"(XP004170603).
Les sensibilités de ces accéléromètres connues ne sont toutefois pas isotropes et la translation de la masse sismique selon une axe pourrait entraver la mesure selon l'autre axe.

Le but de l'invention est donc de proposer une structure de microaccéléromètre biaxe ayant une sensibilité isotrope.

Pour atteindre ce but, l'invention propose un accéléromètre différentiel micro-usiné dans une plaque plane, comportant une base et une cellule de mesure différentielle qui comprend une masse sismique mobile et deux capteurs de force reliés à la masse et à la base, principalement caractérisé en ce que, sous l'effet d'une accélération suivant Ox et/ou Oy, Ox et Oy étant des directions orthogonales du plan de la plaque, la masse sismique est susceptible de se déplacer en translation suivant une direction parallèle à l'accélération, et présente un centre de gravité situé à l'intersection d'un plan A1 perpendiculaire au plan de la plaque et passant par Ox et d'un plan A2 perpendiculaire au plan de la plaque et passant par Oy et en ce qu'un premier capteur de force comprend selon Ox, deux systèmes identiques de détection en vue d'une mesure différentielle de la translation selon Ox, et associé à chaque système de détection, un système de filtrage relié à la base et un second capteur de force comprend selon Oy, deux autres systèmes identiques de détection en vue d'une mesure différentielle de la translation selon Oy, et associé à chaque système de détection, un système de filtrage relié à la base, chaque système de filtrage permettant au système de détection associé de se déplacer selon une direction perpendiculaire à celle de sa détection sans autoriser de déplacement selon sa direction de détection.

Un tel accéléromètre permet de mesurer la projection d'une accélération dans le plan de la plaque ; c'est un accéléromètre différentiel biaxe.

Dans le cas par exemple d'une translation de la masse selon Ox, les systèmes de détection qui ne sont pas sollicités par cette translation, se déplacent avec la masse selon une direction parallèle à Ox, comme dans une glissière, grâce aux systèmes de filtrage auxquels ils sont associés de façon à ne pas entraver la translation de la masse et donc la mesure correspondante.

De même dans le cas d'une translation selon Oy.

Dans le cas général d'une translation selon Ox et Oy, les quatre systèmes de détection et de filtrage sont sollicités.

Selon une caractéristique de l'invention, les plans A1 et A2 sont des plans de symétrie de la cellule de mesure.

Selon une autre caractéristique de l'invention, la base et la masse sismique présentant entre elles un écart selon une direction Oz perpendiculaire au plan de la plaque, l'accéléromètre comporte des moyens moyens de mesure de la variation de l'écart entre la base et la masse sismique, en vue d'une mesure du déplacement de la masse selon Oz.

Un troisième axe de mesure de l'accélération suivant Oz est ainsi ajouté aux deux axes Ox et Oy. Les trois composantes de l'accélération peuvent alors être mesurées.

De préférence, le système de détection est un système à amplification de la force générant la translation, qui comprend par exemple deux terminaisons rigides et, ancrées dans ces terminaisons, deux poutres vibrantes à diapason situées perpendiculairement à l'axe de détection, et deux paires de bras attachés d'une part aux terminaisons et d'autre part au système de filtrage associé.

Le système de filtrage comprend avantageusement un corps relié d'une part au système de détection associé et d'autre part à des points d'ancrage par des bras de flexion rigides ou quasiment rigides selon la direction de détection du système de détection et flexibles selon la direction perpendiculaire à celle de la détection.

D'autres caractéristiques et avantages de l'invention apparaîtront à la lecture de la description détaillée qui suit, faite à titre d'exemple non limitatif et en référence aux dessins annexés dans lesquels :
la figure 1 représente schématiquement un premier mode de réalisation d'un accéléromètre selon l'invention,
la figure 2 représente schématiquement un deuxième mode de réalisation d'un accéléromètre selon l'invention,
la figure 3 illustre schématiquement le fonctionnement d'un accéléromètre tel que celui de la figure 1,
la figure 4 représente schématiquement une vue en coupe selon A1 ou A2 d'un perfectionnement d'un accéléromètre selon l'invention.

L'accéléromètre selon l'invention comporte une cellule de mesure qui peut être réalisée par usinage d'un substrat de silicium sur isolant (SOI) ou de quartz ou d'un autre matériau, mais d'autres méthodes sont également possibles.

Un substrat de silicium sur isolant est constitué d'un substrat monolithique fixe de silicium de quelques centaines de micromètres d'épaisseur (450 µm par exemple) constituant la base de l'accéléromètre, qui porte sur sa face avant une fine couche d'oxyde de silicium de quelques micromètres d'épaisseur (2 µm par exemple) elle-même recouverte d'une couche de silicium monocristallin de quelques dizaines de micromètres d'épaisseur (60 µm par exemple). L'usinage consiste à attaquer le silicium monocristallin par sa face avant jusqu'à atteindre la couche d'oxyde, avec un produit de gravure sélectif qui attaque le silicium sans attaquer significativement l'oxyde. On arrête la gravure lorsque la couche d'oxyde est mise à nu. Cette couche d'oxyde peut elle-même être enlevée par attaque sélective avec un autre produit de manière à ne conserver que la couche superficielle de silicium. Celle-ci peut ainsi être gravée selon les motifs de surface désirés au moyen de techniques de photogravure ou d'une autre technique en usage en microélectronique pour obtenir ainsi la structure plane mobile désirée.

Par la suite on utilisera un repère O,x,y,z représenté sur les figures, dans lequel le plan des figures, qui est celui de la plaque est le plan O,x,y, l'axe Oz représentant la direction perpendiculaire à ce plan. On désigne par A1 le plan perpendiculaire au plan de la plaque et passant par Ox et par A2 le plan perpendiculaire au plan de la plaque et passant par Oy. D'une figure à l'autre, les mêmes éléments sont désignés par les mêmes références.

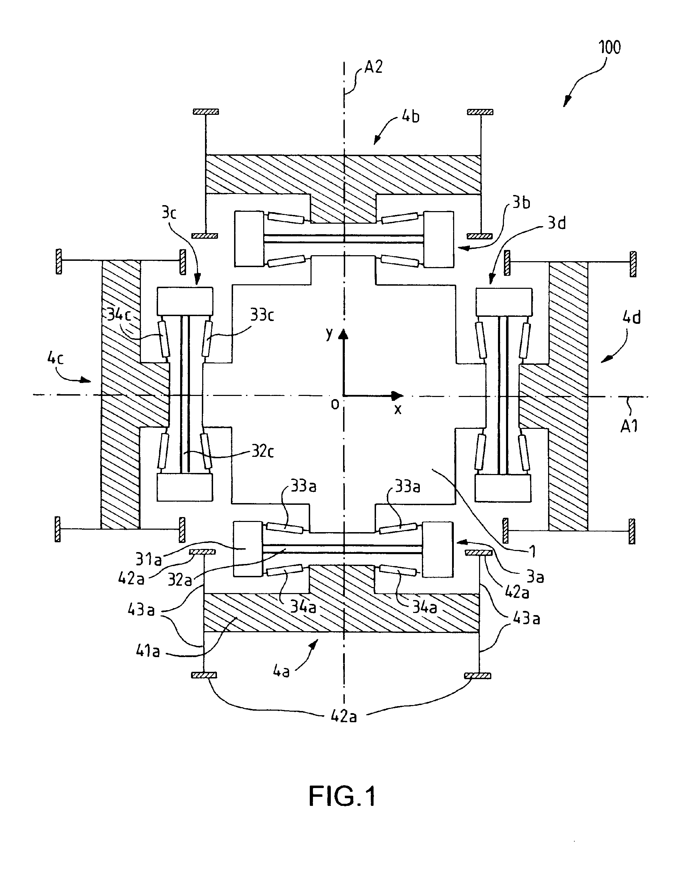

La structure plane mobile d'une cellule de mesure 100 de l'accéléromètre, schématiquement représentée figure 1, comporte deux capteurs de force et une masse sismique 1 mobile dont le centre de gravité est à l'intersection des plans A1 et A2 et qui est susceptible de se déplacer en translation dans le plan de la plaque, c'est-à-dire selon Ox et/ou Oy.

De préférence comme illustré sur les figures, les plans A1 et A2 sont des plans de symétrie de la cellule de mesure 100.

Un premier capteur de force comprend deux systèmes de détection 3a, 3b identiques entre eux, centrés sur l'axe Oy et permettant de réaliser une mesure différentielle de la projection suivant Oy de la translation de la masse 1 ; de même, un second capteur de force comprend deux autres systèmes 3c, 3d identiques entre eux, centrés sur l'axe Ox et permettant de réaliser une mesure différentielle de la projection suivant Ox de la translation de la masse. Bien sûr, les systèmes de détection peuvent être tous les quatre identiques, comme c'est le cas sur les figures.

Le premier capteur de force comprend en outre deux systèmes de filtrage 4a, 4b, un système de filtrage étant associé à un système de détection (3a, 3b) ; de même, le second capteur de force comprend en outre deux systèmes de filtrage 4c, 4d, un système de filtrage étant associé à un système de détection (3c, 3d). De même que pour les systèmes de détection, les systèmes de filtrage sont identiques deux à deux voire tous les quatre. Un système de filtrage, 4a par exemple, permet que le système de détection 3a auquel il est associé, se déplace dans la direction perpendiculaire à celle de sa détection, en l'occurrence selon Ox sans autoriser le déplacement dans la direction de la détection c'est-à-dire Oy. Autrement dit, les systèmes de détection ont un axe de détection privilégié.

Ainsi dans le cas par exemple d'une translation de la masse sismique 1 selon Ox, non seulement les deux systèmes de détection 3a, 3b ne sont pas sollicités par cette translation, mais ils pourraient l'entraver sans la présence des deux systèmes de filtrage associés 4a, 4b. En effet, ces systèmes de filtrage permettent aux systèmes de détection 3a, 3b de se déplacer avec la masse 1 selon Ox comme dans une glissière, de façon à ne pas entraver la translation de la masse 1 et donc la mesure correspondante. De même, dans la cas d'une translation de la masse 1 selon Oy, les deux systèmes de filtrage 4c, 4d permettront aux systèmes de détection 3c, 3d de se déplacer avec la masse selon Oy.

Dans l'exemple de la figure 1, les quatre systèmes de détection sont identiques. On va décrire l'un de ces systèmes, le système 3a par exemple, sachant que cette description est facilement transposable pour les trois autres. Comme représenté sur cette figure, le système 3a est de préférence un système d'amplification de la force générant la translation de la masse 1, mesurée au moyen de deux poutres vibrantes 32a formant diapason, qui subissent une traction ou une compression selon le sens de la projection de l'accélération selon Oy. Les poutres sont centrées sur le plan de symétrie A2 de la structure et disposées symétriquement par rapport à ce plan.

Les poutres vibrantes 32a sont encastrées à chaque extrémité dans une terminaison 31 a rigide. Chacune de ces terminaisons 31 a comporte une paire de bras micro-usinés. Les deux paires sont symétriques par rapport à l'axe des poutres 32a. Une première paire de bras 33a micro-usinés relie la terminaison 31 a à la masse sismique 1. Une deuxième paire de bras 34a micro-usinés, symétriques de la première paire de bras par rapport à l'axe des poutres, relie le système de détection 3a au système de filtrage associé 4a. Ces bras 33a et 34a sont respectivement reliés à la masse sismique 1 et au système de filtrage 4a, par des points d'attache. L'épaisseur d'un bras 33a ou 34a peut varier sur sa longueur. Ces paires de bras 33a et 34a ont pour rôle d'amplifier la projection selon Oy de la force générant la translation de la masse 1.

Le système de détection 3b est symétrique du système 3a par rapport à Ox. Le système de détection 3c est un système 3a ayant pivoté de 90°. Les poutres 32c sont centrées sur A1 et disposées symétriquement par rapport à ce plan et les deux paires de bras 33c et 34c sont symétriques par rapport à l'axe des poutres. Le système de détection 3d est symétrique du système 3c par rapport à Oy.

Selon une variante, les deux poutres vibrantes 32a formant diapason sont remplacées par une seule poutre vibrante.

Selon une autre variante, une ou plusieurs poutres vibrantes sont disposées dans l'axe de la détection. Elles peuvent être directement ancrées d'une part à la masse sismique 1 et d'autre part au système de filtrage associé ou être reliées à la masse sismique et au système de filtrage associé par des moyens d'amplification.

Les systèmes de détection peuvent aussi être basés sur une détection capacitive utilisant par exemple des peignes interdigités, ou piézo-résistive, connues de l'homme du métier.

Dans l'exemple de la figure 1, les quatre systèmes de filtrage sont identiques. On va décrire l'un de ces systèmes, le système 4a par exemple, sachant que cette description est là aussi facilement transposable pour les trois autres. Comme représenté sur cette figure, le système 4a comporte un corps 41 a relié d'une part au système de détection 3a par la paire de bras 34a et relié d'autre part à des points 42a d'ancrage à la base au moyens de doubles bras 43a présentant une bonne rigidité dans la direction de la détection du système 3a, en l'occurrence Oy et une bonne flexibilité dans la direction perpendiculaire, en l'occurrence Ox. Il y a autant de bras que de points d'ancrage ; ils sont disposés de manière à préserver la symétrie de la structure. L'exemple de la figure 1 présente quatre bras, rectilignes. Leur nombre peut être augmenté en conservant la symétrie de la structure ; ils peuvent également être articulés.

Le système de filtrage 4b est symétrique du système 4a par rapport à Ox. Le système de filtrage 4c est un système 4a ayant pivoté de 90°.

Dans la description précédente, les indices a, b, c ou d sont précisés dans les références relatives aux systèmes de détection ou de filtrage. Ils ne sont pas précisés lorsque les références s'appliquent à l'un ou l'autre de ces systèmes.

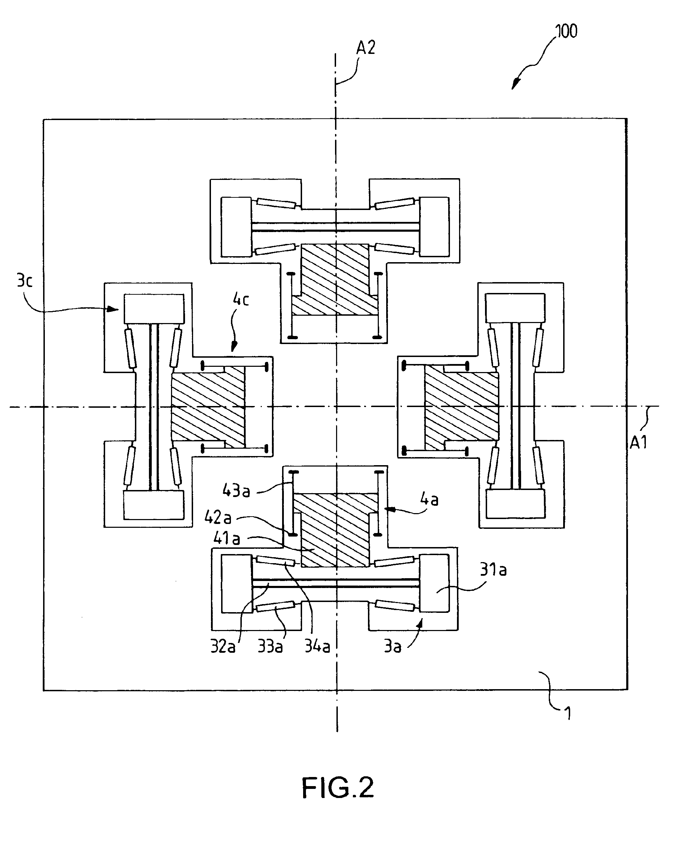

Un autre mode de réalisation d'un accéléromètre selon l'invention est représenté figure 2 : les systèmes de filtrage sont retournés de façon à ce que les points d'ancrage soient vers l'intérieur de la cellule de mesure. On réduit ainsi les contraintes thermo-mécaniques induites par l'éloignement des points d'ancrage entre eux. On entend par contraintes thermo-mécaniques, les contraintes liées à la différence de comportement mécanique entre la base et la cellule de mesure en fonction de la température. Plus les points d'ancrage sont regroupés dans une petite zone, plus cette différence est limitée à cette petite zone.

En outre dans ce cas, les systèmes de détection 3a, 3b, 3c et 3d sont disposés vers l'extérieur de la cellule de mesure, puisque leurs systèmes de filtrage 4 associés sont vers l'intérieur. Pour être reliée aux systèmes de détection 3, la masse sismique 1 est alors reportée elle aussi vers l'extérieur de la cellule de mesure sous la forme d'un cadre. Elle s'étend aussi de préférence dans l'espace libre situé entre les capteurs de force, vers l'intérieur comme représenté figure 2, ce qui se traduit par une masse sismique plus lourde que dans l'exemple de la figure 1.

On a représenté sur cette figure des systèmes de détection 3 et de filtrage 4 identiques à ceux de la figure 1. Les variantes décrites en relation avec cette figure 1 s'appliquent également à ce deuxième mode de réalisation.

Selon ces modes de réalisation, les seules zones non libérées par la gravure de l'oxyde, sont les points d'ancrage 42.

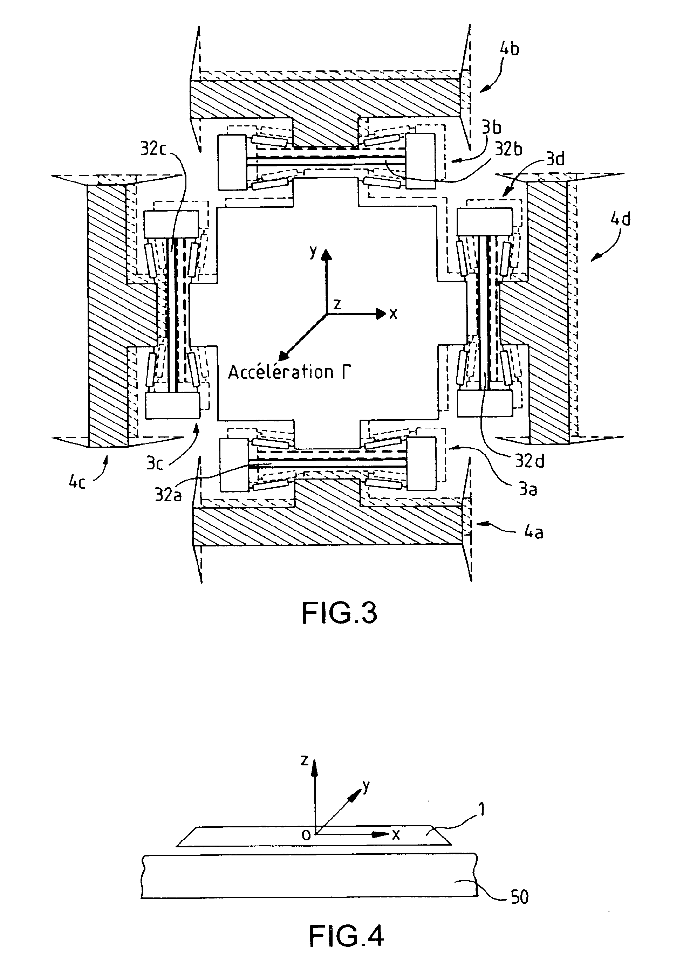

La figure 3 illustre le fonctionnement d'un accéléromètre selon l'invention dans le cas d'une accélération γ quelconque comportant une composante négative selon Ox et selon Oy. Ce fonctionnement est illustré avec l'exemple d'accéléromètre de la figure 1, mais il pourrait tout aussi bien l'être avec celui de la figure 2 ou l'une de leurs variantes. La cellule de mesure au repos est représentée en pointillé, et en trait plein lorsqu'elle est soumise à une accélération γ.

Cette accélération γ génère une translation de la masse sismique 1 selon une direction parallèle à la projection de l'accélération γ dans le plan de la plaque ; les projections sur l'axe Ox et Oy de cette translation sont respectivement mesurées par les systèmes de détection 3c et 3d d'une part, 3a et 3b d'autre part, et leurs systèmes de filtrage associés. Les poutres 32a et 32c des systèmes de détection 3a et 3c sont sollicitées en compression et celles 32b et 32d des systèmes 3b et 3d sont sollicitées en traction. Bien que la projection sur l'axe Ox soit mesurée par les systèmes 3c et 3d, elle mobilise également les systèmes de filtrage 4a et 4b qui permettent respectivement aux systèmes 3a et 3b d'accompagner la translation de la masse selon Ox. Leur déplacement selon Ox est pratiquement équivalent à celui de la masse sismique selon Ox.

De même, bien que la projection sur l'axe Oy soit mesurée par les systèmes 3a et 3b, elle mobilise également les systèmes de filtrage 4c et 4d qui permettent respectivement aux systèmes 3c et 3d d'accompagner la translation de la masse selon Oy.

Les accéléromètres tels que précédemment décrits permettent de mesurer la projection d'une accélération dans le plan de la plaque. Selon une variante de l'invention qui s'applique au premier comme au deuxième mode de réalisation, un troisième axe de mesure de l'accélération suivant Oz est ajouté aux deux axes Ox et Oy. Les trois composantes de l'accélération peuvent alors être mesurées.

Selon cette variante, la base et la masse sismique sont par exemple polarisées formant ainsi une capacité dont la valeur varie en fonction de l'écart entre elles. La composante selon Oz de l'accélération génère une translation de la masse sismique également selon Oz ; cette translation se traduit par une variation de l'écart entre la base et la masse qui induit donc une variation de la valeur de la capacité.

Cette translation sollicite les quatre systèmes de détection 3a, 3b, 3c et 3d en traction ; mais en raison des symétries de la cellule de mesure, ces effets s'annulent lors des mesures différentielles effectuées suivant Ox et Oy.

Comme déjà indiqué, la masse sismique est telle que son centre de gravité est situé sur l'intersection des plans de symétrie A1 et A2. La masse sismique a éventuellement une forme de trapèze, comme représenté figure 4 par une vue partielle en coupe selon Ox ou Oy.

## Revendications

1. Accéléromètre différentiel micro-usiné dans une plaque plane, comportant une base (50) et une cellule de mesure différentielle (100) qui comprend une masse sismique mobile (1) et deux capteurs de force reliés à la masse et à la base, **caractérisé en ce que**, sous l'effet d'une accélération suivant Ox et/ou Oy, Ox et Oy étant des directions orthogonales du plan de la plaque, la masse sismique (1) est susceptible de se déplacer en translation suivant une direction parallèle à l'accélération, et présente un centre de gravité situé à l'intersection d'un plan A1 perpendiculaire au plan de la plaque et passant par Ox et d'un plan A2 perpendiculaire au plan de la plaque et passant par Oy et **en ce qu'**un premier capteur de force comprend selon Ox, deux systèmes identiques de détection (3a, 3b) en vue d'une mesure différentielle de la translation selon Ox, et associé à chaque système de détection (3a, 3b), un système de filtrage (4a, 4b) relié à la base (50) et un second capteur de force comprend selon Oy, deux autres systèmes identiques de détection (3c, 3d) en vue d'une mesure différentielle de la translation selon Oy, et associé à chaque système de détection (3c, 3d), un système de filtrage (4c, 4d) relié à la base (50), chaque système de filtrage permettant au système de détection associé de se déplacer selon une direction perpendiculaire à celle de sa détection sans autoriser de déplacement selon sa direction de détection.

2. Accéléromètre selon la revendication précédente, **caractérisé en ce que** les plans A1 et A2 sont des plans de symétrie de la cellule de mesure (100).

3. Accéléromètre selon l'une des revendications précédentes, **caractérisé en ce que** la base (50) et la masse sismique (1) présentant entre elles un écart selon une direction Oz perpendiculaire au plan de la plaque, il comporte des moyens de mesure de la variation de l'écart entre la base et la masse sismique, en vue d'une mesure du déplacement de la masse selon Oz.

4. Accéléromètre selon la revendication précédente, **caractérisé en ce que** la base (50) et la masse sismique (1) forment une capacité et **en ce que** les moyens de mesure de la variation de l'écart sont des moyens de mesure de la variation de la valeur de la capacité.

5. Accéléromètre selon l'une des revendications précédentes, **caractérisé en ce que** les quatre systèmes de détection (3a, 3b, 3c, 3d) sont identiques.

6. Accéléromètre selon l'une des revendications précédentes, **caractérisé en ce que** le (ou les) système(s) de détection (3) est un système résonant ou capacitif ou piézo-électrique.

7. Accéléromètre selon la revendication précédente, **caractérisé en ce que** le système de détection est un système résonant qui comprend au moins une poutre vibrante ou deux poutres vibrantes à diapason située(s) suivant l'axe de détection.

8. Accéléromètre selon l'une des revendications précédentes, **caractérisé en ce que** le (ou les) système(s) de détection (3) est un système à amplification de la force générant la translation.

9. Accéléromètre selon la revendication précédente, **caractérisé en ce que** le système à amplification comprend deux terminaisons rigides (31) et ancrées dans ces terminaisons, deux poutres vibrantes à diapason (32) situées perpendiculairement à l'axe de détection, et deux paires de bras (33, 34) attachés d'une part aux terminaisons (31) et d'autre part au système de filtrage associé (4).

10. Accéléromètre selon l'une des revendications précédentes, **caractérisé en ce que** les systèmes de filtrage (4a, 4b, 4c, 4d) sont disposés vers l'extérieur de la cellule de mesure (100) par rapport aux systèmes de détection (3a, 3b, 3c, 3d) auxquels ils sont respectivement associés.

11. Accéléromètre selon l'une des revendications 1 à 9, **caractérisé en ce que** les systèmes de filtrage (4a, 4b, 4c, 4d) sont disposés vers l'intérieur de la cellule de mesure (100) par rapport aux systèmes de détection (3a, 3b, 3c, 3d) auxquels ils sont respectivement associés.

12. Accéléromètre selon l'une des revendications précédentes, **caractérisé en ce que** le système de filtrage (3) comprend un corps (41) relié d'une part au système de détection (4) associé et d'autre part à des points d'ancrage (42) à la base (50) par des bras de flexion (43) rigides ou quasiment rigides dans la direction de détection du système de détection et flexibles dans la direction perpendiculaire à celle de la détection.

13. Accéléromètre selon la revendication précédente, **caractérisé en ce que** les bras de flexion (43) sont rectilignes ou articulés.

14. Accéléromètre selon l'une des revendications 12 ou 13, **caractérisé en ce que** le système de filtrage (4) comporte quatre bras de flexion (43).

## Claims

1. A differential accelerometer micro-machined in a flat plate, comprising a base (50) and a differential measurement cell (100) that includes a mobile seismic mass (1) and two force sensors connected to the mass and to the base, **characterised in that**, under the effect of an acceleration along Ox and/or Oy, with Ox and Oy being directions orthogonal to the plane of the plate, the seismic mass (1) is susceptible to being translationally displaced in a direction that is parallel to the acceleration and has a centre of gravity that is located at the intersection of a plane A1 that is perpendicular to the plane of the plate and passes through Ox and a plane A2 that is perpendicular to the plane of the plate and passes through Oy, and **in that** a first force sensor comprises, along Ox, two identical detection systems (3a, 3b) for a differential measurement of the translation along Ox and a filtering system (4a, 4b), associated with each detection system (3a, 3b), that is connected to the base (50), and a second force sensor comprises, along Oy, two other identical detection systems (3c, 3d) for a differential measurement of the translation along Oy and a filtering system (4c, 4d), associated with each detection system (3c, 3d), that is connected to the base (50), each filtering system allowing the associated detection system to be displaced in a direction that is perpendicular to that of its detection without authorising displacement along its direction of detection.

2. The accelerometer according to the preceding claim, **characterised in that** the planes A1 and A2 are planes of symmetry of the measurement cell (100).

3. The accelerometer according to any one of the preceding claims, **characterised in that** since there is a gap between the base (50) and the seismic mass (1) in a direction Oz that is perpendicular to the plane of the plate, it comprises means for measuring the variation in the gap between the base and the seismic mass, with a view to a measurement of the displacement of the mass along Oz.

4. The accelerometer according to the preceding claim, **characterised in that** the base (50) and the seismic mass (1) form a capacitance and **in that** the means for measuring the variation in the gap are means for measuring the variation in the value of the capacitance.

5. The accelerometer according to any one of the preceding claims, **characterised in that** the four detection systems (3a, 3b, 3c, 3d) are identical.

6. The accelerometer according to any one of the preceding claims, **characterised in that** the one or more detection systems (3) is/are a resonant or capacitive or piezo-electric system.

7. The accelerometer according to the preceding claim, **characterised in that** the detection system is a resonant system that comprises at least one vibrating beam or two vibrating tuning fork beams located along the detection axis.

8. The accelerometer according to any one of the preceding claims, **characterised in that** the one or more detection systems (3) is/are a system for amplifying the force that generates the translation.

9. The accelerometer according to the preceding claim, **characterised in that** the amplification system comprises two rigid terminations (31) and, anchored in said terminations, two vibrating tuning fork beams (32) located perpendicular to the detection axis and two pairs of arms (33, 34) attached on the one hand to the terminations (31) and on the other hand to the associated filtering system (4).

10. The accelerometer according to any one of the preceding claims, **characterised in that** the filtering systems (4a, 4b, 4c, 4d) are disposed toward the outside of the measurement cell (100) relative to the detection systems (3a, 3b, 3c, 3d) with which they are respectively associated.

11. The accelerometer according to any one of claims 1 to 9, **characterised in that** the filtering systems (4a, 4b, 4c, 4d) are disposed toward the inside of the measurement cell (100) relative to the detection systems (3a, 3b, 3c, 3d) with which they are respectively associated.

12. The accelerometer according to any one of the preceding claims, **characterised in that** the filtering system (3) comprises a body (41) that is connected on the one hand to the associated detection system (4) and on the other hand to anchoring points (42) on the base (50) by flexion arms (43) that are rigid or quasi-rigid in the direction of detection of the detection system and flexible in the direction that is perpendicular to that of the detection.

13. The accelerometer according to the preceding claim, **characterised in that** the flexion arms (43) are straight or articulated.

14. The accelerometer according to claim 12 or 13, **characterised in that** the filtering system (4) comprises four flexion arms (43).

## Patentansprüche

1. Differentieller Beschleunigungsmesser, der in eine flache Platte mikrogearbeitet wurde und eine Basis (50) und eine differentielle Messzelle (100) umfasst, die eine bewegliche seismische Masse (1) und zwei Kraftsensoren umfasst, die mit der Masse und der Basis verbunden sind, **dadurch gekennzeichnet, dass** die seismische Masse (1) unter der Wirkung einer Beschleunigung entlang Ox und/oder Oy, wobei Ox und Oy Richtungen orthogonal zur Ebene der Platte sind, zu einer translationalen Verschiebung in einer Richtung fähig ist, die parallel zur Beschleunigung ist und einen Schwerpunkt hat, der sich am Schnittpunkt zwischen einer Ebene A1, die lotrecht zur Ebene der Platte ist und durch Ox verläuft, und einer Ebene A2 befindet, die lotrecht zur Ebene der Platte ist und durch Oy verläuft, und dadurch, dass ein erster Kraftsensor entlang Ox zwei identische Detektionssysteme (3a, 3b) für eine differentielle Messung der Translation entlang Ox und in Assoziation mit jedem Detektionssystem (3a, 3b) ein Filtersystem (4a, 4b) umfasst, das mit der Basis (50) verbunden ist, und ein zweiter Kraftsensor entlang Oy zwei andere identische Detektionssysteme (3c, 3d) für eine differentielle Messung der Translation entlang Oy und in Assoziation mit jedem Detektionssystem (3c, 3d) ein Filtersystem (4c, 4d) umfasst, das mit der Basis (50) verbunden ist, wobei jedes Filtersystem eine Verschiebung des assoziierten Detektionssystems in einer Richtung lotrecht zu der ihrer Detektion zulässt, ohne eine Verschiebung entlang ihrer Detektionsrichtung zuzulassen.

2. Beschleunigungsmesser nach dem vorherigen Anspruch, **dadurch gekennzeichnet, dass** die Ebenen A1 und A2 Symmetrieebenen der Messzelle (100) sind.

3. Beschleunigungsmesser nach einem der vorherigen Ansprüche, **dadurch gekennzeichnet, dass** er, da sich zwischen der Basis (50) und der seismischen Masse (1) in einer Richtung Oz lotrecht zur Ebene der Platte eine Lücke befindet, Mittel zum Messen der Variation der Lücke zwischen der Basis und der seismischen Masse im Hinblick auf eine Messung der Verschiebung der Masse entlang Oz umfasst.

4. Beschleunigungsmesser nach dem vorherigen Anspruch, **dadurch gekennzeichnet, dass** die Basis (50) und die seismische Masse (1) eine Kapazität bilden, und dadurch, dass die Mittel zum Messen der Variation der Lücke Mittel zum Messen der Variation des Wertes der Kapazität bilden.

5. Beschleunigungsmesser nach einem der vorherigen Ansprüche, **dadurch gekennzeichnet, dass** die vier Detektionssysteme (3a, 3b, 3c, 3d) identisch sind.

6. Beschleunigungsmesser nach einem der vorherigen Ansprüche, **dadurch gekennzeichnet, dass** das/die Detektionssystem(e) (3) ein resonantes oder kapazitives oder piezoelektrisches System ist/sind.

7. Beschleunigungsmesser nach dem vorherigen Anspruch, **dadurch gekennzeichnet, dass** das Detektionssystem ein resonantes System ist, das wenigstens einen Schwingbalken oder zwei Stimmgabel-Schwingbalken umfasst, die der Detektionsachse folgen.

8. Beschleunigungsmesser nach einem der vorherigen Ansprüche, **dadurch gekennzeichnet, dass** das/die Detektionssystem(e) (3) ein System zum Verstärken der die Translation erzeugenden Kraft ist/sind.

9. Beschleunigungsmesser nach dem vorherigen Anspruch, **dadurch gekennzeichnet, dass** das Verstärkungssystem zwei starre Endabschlüsse (31) und, in den Endabschlüssen verankert, zwei Stimmgabel-Schwingbalken (32), die sich lotrecht zur Detektionsachse befinden, und zwei Paare von Armen (33, 34) umfasst, die einerseits an den Endabschlüssen (31) und andererseits am assoziierten Filtersystem (4) angebracht sind.

10. Beschleunigungsmesser nach einem der vorherigen Ansprüche, **dadurch gekennzeichnet, dass** die Filtersysteme (4a, 4b, 4c, 4d) in Richtung Außenseite der Messzelle (100) in Bezug auf die Detektionssysteme (3a, 3b, 3c, 3d) angeordnet sind, mit denen sie jeweils assoziiert sind.

11. Beschleunigungsmesser nach einem der Ansprüche 1 bis 9, **dadurch gekennzeichnet, dass** die Filtersysteme (4a, 4b, 4c, 4d) in Richtung Innenseite der Messzelle (100) in Bezug auf die Detektionssysteme (3a, 3b, 3c, 3d) angeordnet sind, mit denen sie jeweils assoziiert sind.

12. Beschleunigungsmesser nach einem der vorherigen Ansprüche, **dadurch gekennzeichnet, dass** das Filtersystem (3) einen Körper (41) umfasst, der einerseits mit dem assoziierten Detektionssystem (4) und andererseits mit Ankerpunkten (42) an der Basis (50) durch Biegearme (43) verbunden sind, die in der Detektionsrichtung des Detektionssystems starr oder quasi starr und in der Richtung lotrecht zu der der Detektion flexibel sind.

13. Beschleunigungsmesser nach dem vorherigen Anspruch, **dadurch gekennzeichnet, dass** die Biegearme (43) geradlinig oder artikuliert sind.

14. Beschleunigungsmesser nach Anspruch 12 oder 13, **dadurch gekennzeichnet, dass** das Filtersystem (4) vier Biegearme (43) umfasst.
